**Europäisches Patentamt**

**European Patent Office**

**Office européen des brevets**

(19)

(11) Veröffentlichungsnummer : **0 031 406**
**B1**

(12) **EUROPÄISCHE PATENTSCHRIFT**

(45) Veröffentlichungstag der Patentschrift :
16.02.83

(21) Anmeldenummer : 80106027.8

(22) Anmeldetag : 04.10.80

(51) Int. Cl.³ : **B 60 H   1/26**, F 24 F 13/06

(54) Belüftungsvorrichtung, insbesondere für Grossraumfahrzeuge, wie Omnibusse od. dgl.

(30) Priorität : 22.12.79 DE 2952153

(43) Veröffentlichungstag der Anmeldung :
08.07.81 Patentblatt 81/27

(45) Bekanntmachung des Hinweises auf die Patenterteilung : 16.02.83 Patentblatt 83/07

(84) Benannte Vertragsstaaten :
BE DE FR GB IT

(56) Entgegenhaltungen :
CH A 318 346
DE A 2 231 215
FR A 788 451
FR A 1 103 806
FR A 1 435 099
GB A 521 171
GB A 624 932
GB A 664 533
GB A 1 092 640
US A 2 651 250

(73) Patentinhaber : Gebr. Happich GmbH
Postfach 10 02 49 Clausenbrücke 1
D-5600 Wuppertal 1 (DE)

(72) Erfinder : Jäckel, Helmut
An der Maikammer 26
D-5620 Velbert 15 (DE)

(74) Vertreter : Rehders, Jochen
c/o Fa. Gebr. Happich GmbH Postfach 10 02 49
Clausenbrücke 1
D-5600 Wuppertal 1 (DE)

EP 0 031 406 B1

Belüftungsvorrichtung, insbesondere für Großraumfahrzeuge, wie Omnibusse od. dgl.

Die Erfindung bezieht sich auf eine Belüftungsvorrichtung der im Oberbegriff des Anspruchs 1 angegebenen Art.

Derartige Belüftungsvorrichtungen sind im allgemeinen an der Dachunterseite in Großraumfahrzeugen angebracht und erhalten ihre Luftversorgung durch einen entsprechenden Dachdurchbruch von außen, wobei, um auch bei stehenden oder langsam fahrenden Fahrzeugen eine ausreichende Belüftung zu erzielen, in der Regel ein angetriebenes Lüfterrad vorgeschaltet ist. Bei den bekannten Belüftungsvorrichtungen wird die durch das Unterteil einströmende Luft über den Schließteller mit einer relativ hohen Luftgeschwindigkeit unmittelbar in das Fahrzeuginnere umgelenkt. Dadurch entwickeln sich Zugerscheinungen, die von Fahrzeuginsassen oftmals als unangenehm empfunden werden. Auch ist die Luftleistung bei den bekannten Belüftungsvorrichtungen insbesondere wegen des sich sonst beträchtlich erhöhenden Geräuschpegels begrenzt.

Die FR-PS 1 435 099 zeigt und beschreibt einen Lüfter mit einer den Schließteller übergreifenden, am Unterteil unter Belassung von Luftdurchlaßöffnungen befestigten schalenförmigen Haube. Die Haube ist hier zur Abdeckung des Schließtellers und Halterung des Schließtellerverstellmechanismus vorgesehen und hat keinerlei Einfluß auf die Luftführung, da die Luft ausschließlich über den Schließteller umgelenkt würde, sofern man den an sich für Entlüftungszwecke konzipierten Lüfter für Belüftungszwecke verwenden wollte. Von diesem Lüfter wird im Oberbegriff des Anspruchs 1 ausgegangen.

Bei dem Lüfter nach der GB-PS 624 932 ist es durch eine verstellbare Anordnung eines Ventilringes möglich, die in den Lüfter einströmende Luft wahlweise im wesentlichen senkrecht nach unten oder, durch eine feststehende Verteilerplatte umgelenkt, radial aus dem Lüfter heraustreten zu lassen. Auch bei diesem bekannten Lüfter, bei dem keine schalenförmige Haube vorgesehen ist, gelangt die Luft mit einer relativ hohen Geschwindigkeit unmittelbar in das Fahrzeuginnere, so daß auch hier Zugerscheinungen zwangsläufig auftreten werden.

Bei einer Belüftungsvorrichtung anderer Gattung, wie sie in der GB-PS 664 533 beschrieben ist, kann im Bereich der Luftaustrittsöffnungen zusätzlich eine Führungs- oder Umlenkeinrichtung vorhanden sein. Diese Druckschrift gibt jedoch keinen Hinweis, wie eine solche Einrichtung ausgestaltet oder beschaffen sein soll.

Der im Anspruch 1 angegebenen Erfindung liegt nun die Aufgabe zugrunde, eine Belüftungsvorrichtung zu schaffen, die eine zugfreie und bei größerer Luftleistung geräuscharme Belüftung gewährleistet.

Die Aufgabenlösung ist im Kennzeichenteil des Anspruchs 1 angegeben.

Der als überraschend anzusehende Erfolg der Erfindung ist darin zu sehen, daß bei verringerter Luftgeschwindigkeit eine größere Luftaustrittsmenge erzielt wird. Eine geringere Luftgeschwindigkeit bedeutet geringere Zugerscheinung und eine größere Luftaustrittsmenge verbessert die Belüftungsleistung. Der durch die Erfindung erzielte Effekt ist darauf zurückzuführen, daß die mit relativ hoher Geschwindigkeit radial über den Schließtellerrand austretende Luft durch die den Schließteller umgebende Luftleithaube wenigstens teilweise umgelenkt und beruhigt wird, bevor sie die Luftaustrittskanäle verläßt. Dadurch wird auch eine große Betriebsruhe erzielt.

Vorteilhafte Ausgestaltungen und zweckmäßige Weiterbildungen der Erfindung sind in den Unteransprüchen 2 bis 4 angegeben.

Die Erfindung wird im nachfolgenden anhand der Zeichnung, in der ein Ausführungsbeispiel dargestellt ist, näher erläutert. Es zeigen

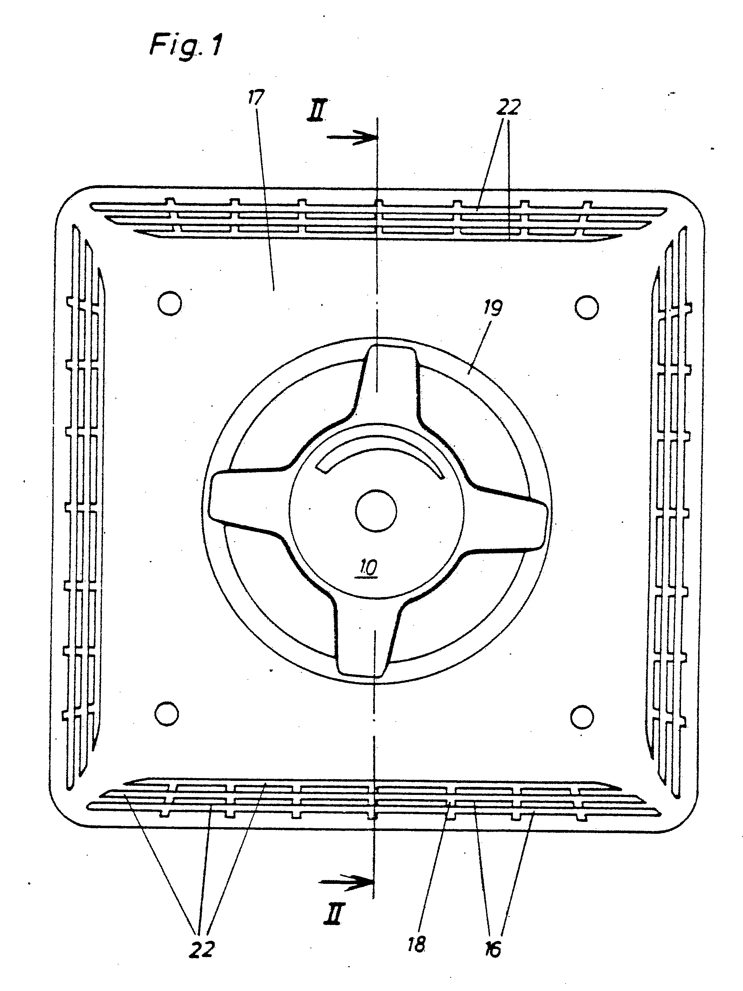

Figur 1 die Belüftungsvorrichtung in Ansicht und

Figur 2 einen Schnitt II-II nach Fig. 1.

Die Belüftungsvorrichtung besteht im wesentlichen aus einem Unterteil 1, einem darin hin- und herbeweglich geführten Schließteller 2 und einer Haube 3, die als Luftleithaube ausgebildet ist.

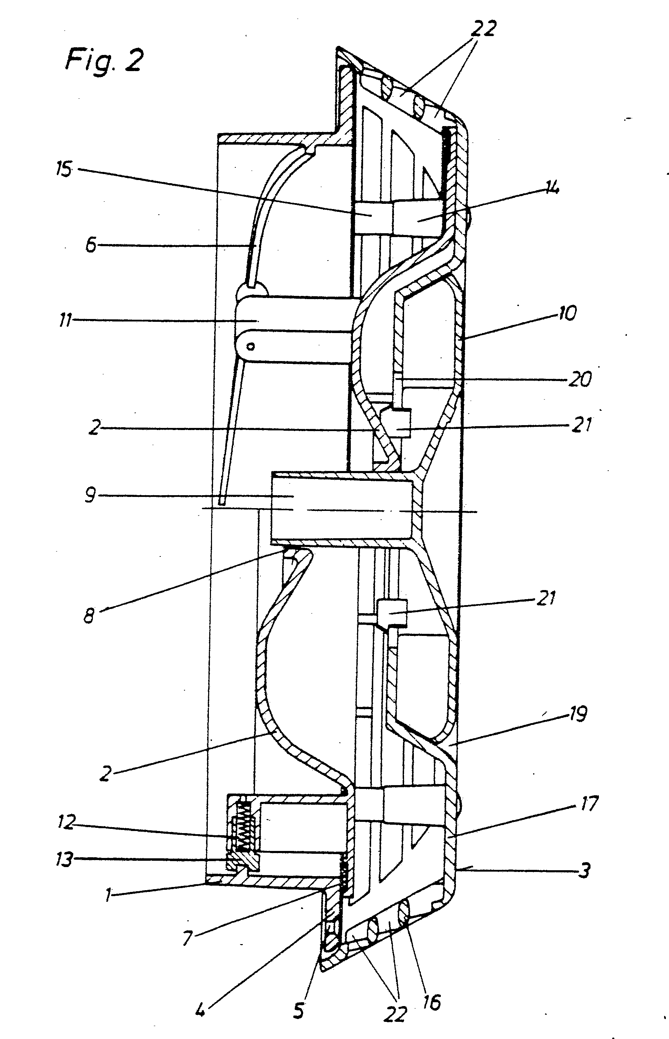

In Fig. 2 ist der Schließteller 2 in der unteren Schnitthälfte in seiner geschlossenen Endstellung und in der oberen Schnitthälfte in seiner größtmöglichen Öffnungs- bzw. Belüftungsstellung dargestellt.

Das Unterteil 1 ist rohrförmig ausgebildet und besitzt auf der dem Schließteller 2 zugewandten Seite einen auskragenden Flansch 4 mit Bohrungen 5, durch die Schrauben zur Befestigung der Belüftungsvorrichtung an einem Fahrzeugdach od. dgl. hindurchgeführt werden können. Innenwandig weist das Unterteil 1 gewindegangartige Führungen 6 zur Verstellung des Schließtellers 2 auf.

Der Schließteller 2 besitzt am Tellerrand eine gegen den Flansch 4 wirkende Ringdichtung 7. Mittig besitzt der Schließteller 2 eine Durchtrittsöffnung 8 mit unrundem Öffnungsquerschnitt, die von einem im Querschnitt entsprechend unrunden Verbindungszapfen 9 durchsetzt ist, der seinerseits mit einer Handhabe 10 für die Betätigung des Schließtellers 2 einstückig ist. Der Schließteller 2 besitzt weiterhin Materialansätze 11 mit Sackbohrungen 12, in die federbelastete, mit den Führungen 6 zusammenwirkende Gleitstücke eingesetzt sind. Dadurch wird eine Drehbewegung des Schließtellers 2 in eine hierzu senkrechte Hubbewegung umgewandelt, wodurch sich eine stufenlose Einstellbarkeit ergibt.

Der Schließteller 2 wird mit radialem Abstand von der im dargestellten Ausführungsbeispiel quadratisch ausgebildeten Luftleithaube übergriffen. Die Luftleithaube, die, ebenso wie das Unterteil 1 und der Schließteller 2, als Kunststoff-spritzgußteil ausgebildet ist, besitzt angeformte rohrförmige Lageransätze 14, die mit am Flansch 4 des Unterteils 1 angeformten rohrförmigen Lageransätzen 15 fluchten. Durch die Lageransätze 14 und 15 werden Schrauben geführt, die Unterteil 1 und Luftleithaube unter Einschluß des Schließtellers 2 fest miteinander verbinden.

Die Luftleithaube besitzt zur offenen Seite hin divergierende Wandungen, die gitterförmig ausgebildet sind. Dabei erstrecken sich die Gitterstreben 16 parallel zum Boden 17 der Luftleithaube und sind durch Zwischenstreben 18 miteinander verbunden. Die Gitterstreben 16 und Zwischenstreben 18 besitzen eine strömungsgünstige Form, indem sie eine ovale oder ellipsenförmige Querschnittsfläche aufweisen, wobei der große Durchmesser etwa parallel zum Boden 17 verläuft. Zwischen den Gitterstreben 16 und Zwischenstreben 18 sind die Luftaustrittskanäle 22 ausgebildet.

Der Boden 17 der Luftleithaube weist eine mittige Mulde 19 mit einer zentrischen Lochung 20 auf. In der Mulde 19 ist die als Stellrad ausgebildete Handhabe 10 versenkt aufgenommen und befestigt. Zur Befestigung besitzt die ebenfalls als Kunststoff-Spritzgußteil ausgebildete Handhabe 10 angeformte Klipsrasten 21, die den Randbereich der Lochung 20 hintergreifen.

Der offene Rand der Luftleithaube schließt mit der befestigungsseitigen Fläche des Flansches 4 ab, sodaß der Schließteller 2 in jeder Belüftungsstellung allseitig von der Luftleithaube umgeben ist. Sämtliche äußeren Kanten der Luftleithaube sind stark abgerundet ausgebildet, um eine Verletzungsgefahr durch die Belüftungsvorrichtung von vornherein auszuschließen. Sämtliche Bestandteile der Belüftungsvorrichtung sind zu einer montagefertigen Baueinheit zusammengesetzt.

### Ansprüche

1. Belüftungsvorrichtung, insbesondere für Großraumfahrzeuge, wie Omnibusse od. dgl., bestehend aus einem einen Flansch (4) mit einem zylindrischen Fortsatz aufweisenden Unterteil (1) und einem darin senkrecht zur Flanschebene hin- und herbeweglich geführten Schließteller (2), der aus einer am Flansch (4) anliegenden geschlossenen Endstellung in eine größtmögliche Belüftungsstellung überführbar ist, wobei eine den Schließteller (2) übergreifende, am Unterteil (1) unter Belassung von Luftdurchlaßöffnungen befestigte schalenförmige Haube (3) vorgesehen ist, dadurch gekennzeichnet, daß die Haube (3) den Schließteller (2) in jeder Belüftungsstellung allseitig umgibt, als Luftleithaube mit Luftdurchtrittskanälen (22) ausgebildet und derart am Unterteil (1) befestigt ist, daß ihr offener Rand mit der befestigungsseitigen Fläche des Flansches (4) abschließt, wobei die sich an dem Boden (17) der Luftleithaube anschließende Umfangswandung zwecks Bildung der Luftdurchtrittskanäle (22) gitterförmig gestaltet ist und wobei die Gitterstreben (16) sich parallel zum Boden (17) erstrecken, über Zwischenstreben (18) miteinander verbunden sind und eine strömungsgünstige ovale oder ellipsenförmige Querschnittsfläche aufweisen.

2. Belüftungsvorrichtung nach Anspruch 1, dadurch gekennzeichnet, daß der Boden (17) der Luftleithaube eine mittig angeordnete, zentrisch gelochte Mulde (19) aufweist, in der drehbeweglich eine mit dem Rand der Loch-ung (20) hintergreifende Klipsrasten (21) ausgebildete Handhabe (10) versenkt angeordnet ist, die über einen Verbindungszapfen (9) mit dem Schließteller (2) gekuppelt ist.

3. Belüftungsvorrichtung nach Anspruch 1 oder 2, dadurch gekennzeichnet, daß die Luftleithaube eine kreisrunde oder eckige, wie quadratische Ausbildung besitzt.

4. Belüftungsvorrichtung nach einem oder mehreren der Ansprüche 1 bis 3, dadurch gekennzeichnet, daß die Luftleithaube als Kunststoff-Spritzgußteil ausgebildet ist.

### Claims

1. A fresh-air vent for, for example, a large-capacity vehicle such as a bus or the like, the vent comprising : a base (1) having a cylindrical portion terminating in a flange (4), a closing disc (2) guided in the cylindrical portion for reciprocating motion in a direction normal to the plane containing the flange and movable from one end position in which it abuts on the flange (4) and closes the vent to another end position permitting maximum ventilation, and a dish-shaped cap (3) fastened to the base (1), which cap overlaps the closing disc (2) yet leaves air outlets, characterized in that the cap (3) completely surrounds the closing disc (2) in any ventilation position, is constructed to function as an air-ducting cap, is provided with air discharge ducts (22) and is fastened to the base (1) so that its free edge terminates level with the mounting face of the flange (4), in that the air-ducting cap's peripheral wall adjoining its bottom (17) is latticed so as to form the air discharge ducts (22), and in that the lattice strips (16) extend parallel with the bottom (17), are interconnected by transverse strips (18) and cross-sectionally of oval or elliptical, the air flow promoting, shape.

2. A fresh-air vent according to claim 1, characterized in that the bottom (17) of the air-ducting cap is provided at its mid-portion with a centrally bored trough (19) into which a knob (10) having clip-in retainers (21) engaging the edge of the bore (20) is rotatably countersunk and attached by an assembling pin (9) to the closing disc (2).

3. A fresh-air vent according to claim 1 or claim 2, characterized in that the shape of the air-ducting cap is a circular or angular, for example square, one.

4. A fresh-air vent according to any one or more of the claims 1 to 3, characterized in that the air-ducting cap is a plastics injection-moulded component.

## Revendications

1. Dispositif d'aération notamment pour véhicules de grande capacité, comme des autobus ou analogues, comprenant une partie inférieure (1) comportant un rebord (4) à prolongement cylindrique et une cuvette d'obturation (2) qui y est guidée perpendiculairement au plan du rebord de façon à effectuer des mouvements de va-et-vient, qui peut passer d'une position finale fermée au contact du rebord (4) à une position d'aération maximale possible, un dôme en forme de coquille (3) surplombant la cuvette d'obturation (2) étant fixée à la partie inférieure (1) en ménageant des ouvertures de passage de l'air, caractérisé en ce que le dôme (3) entoure la cuvette d'obturation (2) de toutes parts en toute position d'aération, est conformé en dôme déflecteur d'air pourvu de canaux de passage de l'air (22) et est fixé à la partie inférieure (1) de telle façon que son bord ouvert s'achève par la surface du rebord (4) située du côté de fixation, la paroi périphérique se raccordant au fond (17) du dôme déflecteur étant conformée en grille pour former les canaux de passage de l'air (22) et les entretoises de la grille (16) s'étendant parallèlement au fond (17), étant reliées entre elles par des entretoises de liaison (18) et présentant une surface de section droite ovale ou ellipsoïdale aérodynamique.

2. Dispositif selon la revendication 1, caractérisé en ce que le fond (17) du dôme déflecteur comporte une cavité centrale (19) pourvue d'une perforation centrale, dans laquelle est encastrée de façon à pouvoir tourner une poignée (10) comportant des crans (21) accrochant l'arrière du bord de la perforation (20), qui est accouplée à la cuvette d'obturation (2) par le tenon de liaison (9).

3. Dispositif d'aération selon la revendication 1 ou 2, caractérisé en ce que le dôme déflecteur d'air présente une forme circulaire ou rectangulaire, ou bien carrée.

4. Dispositif selon l'une quelconque des revendications 1 à 3, caractérisé en ce que le dôme déflecteur d'air est conformé en pièce plastique moulée par injection.

Fig.1

**Fig. 2**